# FASCICULE DE BREVET EUROPEEN

(11) **EP 3 215 884 B1**
(45) Date de publication et mention de la délivrance du brevet: **03.10.2018**
(21) Numéro de dépôt: 15788078.2
(22) Date de dépôt: 03.11.2015
(51) Int. Cl.: G02B 27/01

(54) **SYSTÈME DE VISUALISATION TÊTE HAUTE À OPTIQUES CROISÉES**
KOPFMONTIERTE ANZEIGEVORRICHTUNG MIT GEKREUZTER OPTIK
HEAD-MOUNTED DISPLAY WITH CROSSED OPTICS

(30) Priorité: 06.11.2014 FR 1402510
(43) Date de publication de la demande: 13.09.2017
(73) Titulaire: THALES, 92400 Courbevoie (FR)
(72) Inventeur: ESPIE, Jean-Luc, F-69440 Mormant (FR); DIAZ, Frédéric, F-42570 Saint-Heand (FR)
(74) Mandataire: Bréda, Jean-Marc
(86) Numéro de dépôt international: PCT/EP2015/075624
(87) Numéro de publication internationale: WO 2016/071352

(56) Documents cités:
- WO-A2-2013/036888
- FR-A1- 2 593 932

## Description

Le domaine de l'invention est celui des systèmes de visualisation de casque. Ces systèmes sont aussi connus sous l'appellation anglo-saxonne « HMD See-Through », « HMD » étant l'acronyme de « Head Mounted Display ». Ils sont destinés à différentes applications. A titre d'exemples, ils peuvent être portés par des pilotes d'aéronef ou des fantassins.

Ces systèmes sont destinés à projeter vers l'oeil de l'utilisateur une image aérienne collimatée à l'infini et superposée sur le paysage extérieur. L'image projetée peut comporter une symbologie représentative d'informations sur les tâches, la mission à accomplir ou l'environnement extérieur et/ou encore l'image donnée par une caméra. Cette dernière peut être une caméra à bas niveau de lumière ou une caméra infrarouge ou une caméra thermique.

Ces systèmes peuvent être monoculaires ou binoculaires selon que l'utilisateur perçoit l'image sur un oeil ou sur les deux yeux.

Ces systèmes comportent généralement un afficheur de petites dimensions à haute résolution sur lequel est affichée l'image à projeter, une optique-relais et un « combineur » ou mélangeur optique qui assure à la fois la réflexion de l'image projetée et collimatée vers l'oeil de l'utilisateur et la transmission du paysage extérieur. Ce combineur est intégré à un écran ou une visière ou des lunettes. On entend par visière ou écran un élément courbe transparent disposé devant les yeux de l'utilisateur et dont la fonction première est d'assurer la protection des yeux de l'utilisateur tout en lui assurant une bonne visibilité de l'extérieur. Cette protection est mécanique mais peut être également optique si la visière comporte des traitements particuliers. Dans la suite du texte, on utilise indifféremment le terme « écran » ou « visière » pour désigner le support du combineur.

Dans la majorité des applications, le champ visuel du système de visualisation doit être important, c'est-à-dire compris entre 20 degrés et 40 degrés. Or, dans la plupart des solutions proposées, le combineur est un élément optique avec un hors d'axe significatif de façon à assurer une bonne transmission et à laisser le moins possible d'éléments optiques dans le champ visuel. Construire une solution optique de bonne qualité avec un hors d'axe important constitue une première difficulté.

Une seconde difficulté de ce type de système de visualisation est que l'intégration du combineur à l'écran doit perturber le moins possible la vision de l'extérieur, la vision humaine étant naturellement grand champ. Ainsi, le champ de vision humaine atteint 200 degrés dans un plan latéral et 125 degrés dans un plan vertical. Le combineur doit donc introduire le moins de masques visuels possibles et doit avoir une forme qui épouse le mieux possible les contours du visage. Il faut aussi que le système soit compatible du port de lunettes de correction de vue.

Enfin, le poids et l'encombrement du système doivent rester faibles de façon à pouvoir s'intégrer facilement sous la partie frontale d'un casque, ou se fixer directement sur le visage sous forme d'un masque, à l'exemple des masques de ski ou des masques de protection ou encore à l'aide d'une coiffe ou d'un serre-tête adapté.

Les systèmes de visualisation grand public montés sur des branches de lunette ne remplissent pas toutes ces conditions.

Différentes solutions techniques ont été proposées. Un premier type de solution consiste à implanter l'ensemble du système en latéral, l'ensemble du système étant contenu dans un plan essentiellement horizontal. L'afficheur et l'optique-relais sont situés sur un des côtés latéraux de la tête de l'utilisateur. A titre d'exemples, on citera les dispositifs décrits dans les demandes WO 2010/089495 intitulée « Dispositif portable d'affichage tête haute et de réalité augmentée » et WO 2009/136393 intitulée « Wide angle helmet mounted display system ». Ces solutions présentent les inconvénients d'être complexes, encombrantes et de présenter un masque latéral qui peut être significatif.

Un second type de solution consiste à implanter l'ensemble du système en frontal, l'ensemble du système étant contenu dans un plan sensiblement vertical au-dessus de l'oeil de l'observateur. A titre d'exemples, on citera les dispositifs décrits dans les demandes WO 2013/036888 intitulée « Night vision devices and methods» et US 5 341 242 intitulée « Helmet mounted display». Comme on peut le voir sur les différentes figures de ces demandes, les solutions optiques mises en place sont complexes. Leur intégration dans la partie frontale du casque n'est pas simple. Par ailleurs, ce sont essentiellement des solutions monoculaires et le passage en version binoculaire de ces solutions est problématique.

Le système de visualisation de tête selon l'invention ne présente pas ces inconvénients. Il peut être monoculaire ou binoculaire. Il comporte des optiques dites croisées. C'est-à-dire que, dans le cas d'un système binoculaire, si un mélangeur optique est disposé devant l'oeil droit de l'utilisateur, l'optique-relais et l'afficheur correspondant sont disposés en position frontale au-dessus de l'oeil gauche de l'utilisateur et sous le mélangeur optique situé du côté gauche. Cette disposition est obtenue en choisissant judicieusement les paramètres géométriques des différents éléments optiques, leurs courbures et la forme de leurs surfaces. Cette architecture optique a de nombreux avantages tant au niveau de la simplicité de construction que de l'encombrement et se loge facilement sous la partie frontale d'un casque.

Plus précisément, l'invention a pour objet un système de visualisation comportant un premier afficheur et un premier ensemble optique comportant une première optique-relais et un premier mélangeur optique semi-transparent, le premier ensemble optique étant agencés pour former une seconde image à l'infini d'une première image affiché par le premier afficheur, le système de visualisation étant destiné à être porté par la tête d'un utilisateur, le premier mélangeur optique étant disposé devant un des deux yeux dudit utilisateur en conditions d'utilisation, la pupille optique de sortie du premier ensemble étant disposée au niveau dudit oeil, l'axe optique du premier ensemble optique correspondant au rayon lumineux du champ de vision central passant par le centre de la pupille optique, caractérisé en ce que :
Le premier mélangeur optique est une lame mince à faces courbes sensiblement parallèles, chaque face étant définie par une loi polynomiale ou un fichier de points définissant une surface libre,
L'inclinaison du premier mélangeur optique sur l'axe optique est sensiblement égale à 35 degrés,
La distance séparant la pupille de sortie du point d'intersection entre l'axe optique et le premier mélangeur optique vaut environ 60 millimètres ;
Le mélangeur optique a une puissance optique quasiment nulle en transmission pour ne pas déformer la vision directe.
En position d'utilisation, l'inclinaison de l'axe optique moyen entre le premier mélangeur optique et la première lentille frontale dans un plan vertical et par rapport à une droite joignant les centres des deux yeux est d'environ 25 degrés, de façon que la première optique-relais soit située au niveau du front et au-dessus de l'autre oeil de l'utilisateur, en position croisée avec le premier combineur optique.

Avantageusement, la première optique-relais comportant une première lentille frontale, la première surface de ladite première lentille frontale située au plus près du combineur est définie par une loi polynomiale ou un fichier de points définissant une forme libre.

Avantageusement, la seconde surface de la première lentille frontale est asphérique ou est définie par une loi polynomiale ou un fichier de points définissant une forme libre.

Avantageusement, le premier afficheur étant du type écran à cristaux liquides ou « LCD », acronyme de « Liquid Crystal Display », ou du type écran émissif ou « OLED », acronyme de « Organic Light Emitting Diode », la première optique-relais comporte uniquement, en partant du premier mélangeur optique vers le premier afficheur, la première lentille frontale, un doublet de lentilles convergente-divergente à surfaces sphériques et une lentille biconvexe excentrée à surfaces sphériques.

Avantageusement, le premier afficheur fonctionnant par réflexion et étant du type « LCOS », acronyme de « Liquid Crystal on Silicon », le système comportant une source d'éclairage, la première optique-relais est du type télécentrique et comporte uniquement, en partant du premier mélangeur optique vers le premier afficheur, la première lentille frontale, un doublet de lentilles convergente-divergente à surfaces sphériques, un ménisque convergent excentré à surfaces sphériques, un cube séparateur apte à réfléchir la lumière issue de la source d'éclairage vers le premier afficheur et une lentille biconvexe excentrée à surfaces sphériques.

Avantageusement, le cube séparateur est un séparateur par réflexion du type « PBS », acronyme signifiant « Polarizer Beam Splitter ».

Avantageusement, dans sa variante binoculaire, le système comporte un second afficheur et un second ensemble optique comportant une seconde optique-relais et un second mélangeur optique semi-transparent, le second afficheur étant identique au premier afficheur, le second ensemble optique étant identique au premier ensemble optique, le second afficheur et le second ensemble optique étant disposés symétriquement par rapport au premier afficheur et au premier ensemble optique, de façon que le second mélangeur optique soit disposé devant l'autre oeil de l'utilisateur, la première optique-relais étant disposée au-dessus du second mélangeur optique et la seconde optique-relais étant disposée au-dessus du premier mélangeur optique, le plan de symétrie étant le plan médian de la tête.

La forme et l'orientation des « combineurs », orientées dans une direction générale suivant la courbure générale du visage, permettent de prolonger les écrans droit et gauche au-delà des zones « utiles » semi réflectives pour constituer un écran monobloc assurant une fonction de protection pour le visage et notamment les yeux. Ainsi, la forme continue de l'écran selon une courbe générale convexe suivant celle du visage permet de conserver une vision directe au travers de l'écran sans altérations.

L'invention sera mieux comprise et d'autres avantages apparaîtront à la lecture de la description qui va suivre donnée à titre non limitatif et grâce aux figures annexées parmi lesquelles :
La figure 1 représente une vue de face d'un premier système de visualisation monoculaire selon l'invention ;
La figure 2 représente une vue de profil du système de visualisation monoculaire précédent ;
La figure 3 représente une vue de face de la version binoculaire du système de visualisation précédent ;
La figure 4 représente une vue en coupe du premier système de visualisation monoculaire ;
La figure 5 représente une vue de face d'un second système de visualisation monoculaire selon l'invention ;
La figure 6 représente une vue en coupe du second système de visualisation monoculaire.

Un système de visualisation selon l'invention est destiné à être porté par la tête d'un utilisateur. Le support mécanique du système de visualisation porté par la tête peut être un casque, une paire de lunettes ou tout autre support de tête.

Le système de visualisation existe en version monoculaire ou binoculaire. Chaque bloc monoculaire comporte :
- un afficheur, et
- un ensemble optique comportant une optique-relais dioptrique et un mélangeur ou combineur optique partiellement transparent, typiquement semi-transparent intégré à un écran, à une visière de casque ou à des lunettes et fonctionnant par réflexion. Le mélangeur optique est une lame mince à faces courbes et sensiblement parallèles entre elles qui n'introduit pas ou peu de distorsion du paysage extérieur. Ce mélangeur n'a pas de puissance optique en transmission.

Dans la suite de la description, on appelle axe optique, l'axe virtuel correspondant au rayon lumineux du champ de vision central passant par le centre de la pupille optique.

Le fonctionnement d'un bloc monoculaire est le suivant. L'ensemble optique est agencé pour former une seconde image collimatée ou à « l'infini optique » d'une première image affichée par l'afficheur, la pupille optique de sortie de l'ensemble optique étant disposée au niveau de l'oeil de l'observateur. Elle est supérieure au diamètre de la pupille d'oeil de façon à permettre un certain confort d'utilisation et l'adaptation aux variations d'écarts inter-pupillaires. Cette image est perçue par l'utilisateur en superposition sur le paysage extérieur transmis par le mélangeur optique.

Pour que l'implantation générale d'un système de visualisation selon l'invention sur un support soit la plus ergonomique possible et la plus simple à réaliser, les optiques sont dites croisées. C'est-à-dire que, dans le cas d'un système binoculaire, si un mélangeur optique est disposé devant l'oeil droit de l'utilisateur, l'optique-relais et l'afficheur correspondant sont disposés en position frontale au-dessus de l'oeil gauche de l'utilisateur et sous le mélangeur optique situé du côté gauche.

Pour que cette implantation soit possible, il est nécessaire que :
- L'inclinaison du premier mélangeur optique sur l'axe optique soit sensiblement égale à 35 degrés, c'est-à-dire que l'axe optique réfléchi fasse un angle d'environ 70 degrés avec l'axe optique incident. Un angle inférieur nécessite une distance plus importante entre l'oeil et le combineur impliquant des optiques de plus grandes dimensions. Un angle supérieur nécessite des corrections optiques plus importantes, difficiles à maîtriser. Il est préférable que cet angle d'inclinaison soit compris entre 33 degrés et 37 degrés. Il est essentiel que le mélangeur optique soit ou une surface non axisymétrique, définie par une loi polynomiale ou une surface dite « free-form » définie par un fichier de points. En effet, un combineur sphérique donne des aberrations géométriques trop importantes pour qu'elles puissent être corrigées par une optique-relais simple ;
- La distance séparant la pupille de sortie du point d'intersection entre l'axe optique et le premier mélangeur optique vaut environ 60 millimètres. Cette distance est nécessaire de façon que, dans le cas d'une application binoculaire, l'optique-relais du premier système optique puisse se loger entre le front et le combineur du second système optique. Elle permet également à l'utilisateur de porter des lunettes de vue ;
- En position d'utilisation, l'inclinaison de l'axe optique moyen entre le premier mélangeur optique et la première lentille frontale de l'optique-relais dans un plan vertical et par rapport à une droite joignant les centres des deux yeux est d'environ 25 degrés, de façon que la première optique-relais soit située au niveau du front et au-dessus de l'autre oeil de l'utilisateur, en position croisée avec le premier combineur optique. Un angle plus faible amène l'optique-relais à être trop basse sur l'autre oeil et introduit des masques visuels. Un angle plus grand amène l'optique-relais à être trop haute et ne peut plus être positionnée sous la partie frontale du casque. Il est préférable que cet angle d'inclinaison soit compris entre 20 degrés et 30 degrés. Il est important que la première surface de la première lentille frontale située au plus près du combineur soit de type non axisymétrique, définie par une loi polynomiale ou soit de type « free form » définie par un fichier de points de façon à réduire les aberrations géométriques résiduelles du combineur.

Les composants optiques fortement excentrés tels que le combineur selon l'invention présentent des aberrations géométriques très importantes si ce sont de simples miroirs sphériques inclinés. Comme il a été dit, il est essentiel que la surface du mélangeur optique soit une surface non axisymétrique ou « free form », c'est-à-dire que la courbure de sa surface soit définie par une loi polynomiale ou un fichier de points pour compenser au mieux les aberrations d'excentrement.

Cependant, cette correction est insuffisante pour corriger totalement les aberrations géométriques du combineur. L'optique-relais doit donc compenser les aberrations résiduelles. L'optique-relais comporte une première lentille frontale située au plus près du combineur dont la première surface est également définie par une loi polynomiale. On corrige ainsi « au plus près » les aberrations du combineur. De façon à éviter la multiplication des lentilles à surface « free-form » ou asphériques, on recourt également à l'excentrement ou au basculement de lentilles à surfaces sphériques pour corriger au mieux les aberrations résiduelles. Il est à noter que l'aberration de distorsion n'est pas corrigée au niveau de l'optique. Cette correction est faite directement au niveau de l'image générée par l'afficheur par traitement d'image à partir des lois de distorsion optique. Celle-ci comporte une distorsion inverse qui compense exactement la distorsion de l'ensemble optique.

La mise en place précise et l'optimisation des composants optiques se fait au moyen de codes de calcul optique, bien connus de l'homme du métier.

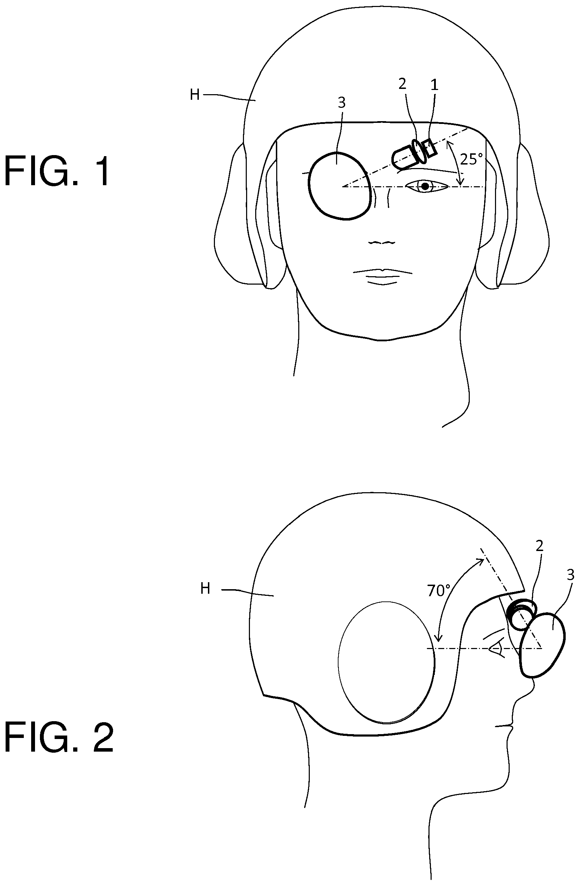

Une première implantation d'un système selon l'invention sur un casque H est représentée sur les figures 1, 2 et 3. Sur ces différentes figures, l'écran ou la visière du casque ne sont pas représentés. La figure 1 représente une vue de face et la figure 2 une vue de profil d'un système monoculaire. Sur ces deux figures, l'afficheur 1 et l'optique-relais 2 sont du côté gauche du casque et le combineur 3 envoie une image sur l'oeil droit de l'utilisateur.

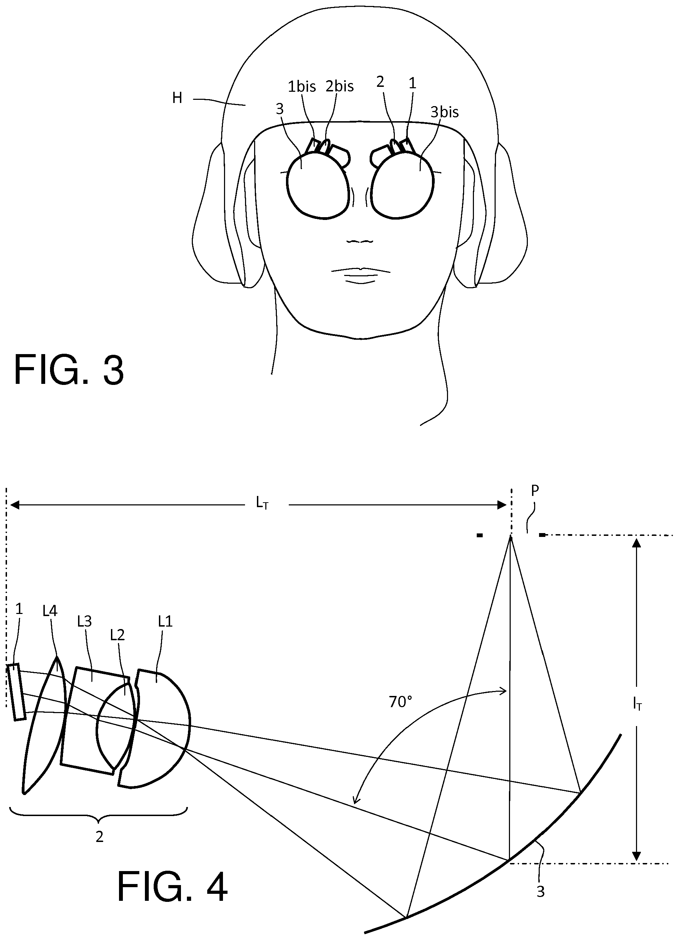

Comme représenté en figure 3, le système binoculaire comporte deux ensembles identiques symétriques l'un de l'autre par rapport à un plan vertical. Ainsi, le second ensemble comporte un afficheur 1 bis, une optique-relais 2 bis et un combineur 3 bis.

Cette première implantation fonctionne avec un afficheur fonctionnant par transmission ou par émission. Cet afficheur peut être passif. Il peut s'agir d'un afficheur de type « LCD », acronyme de « Liquid Crystal Display ». Il peut également être actif, de type « OLED », acronyme signifiant « Organic Light-Emitting Diode ».

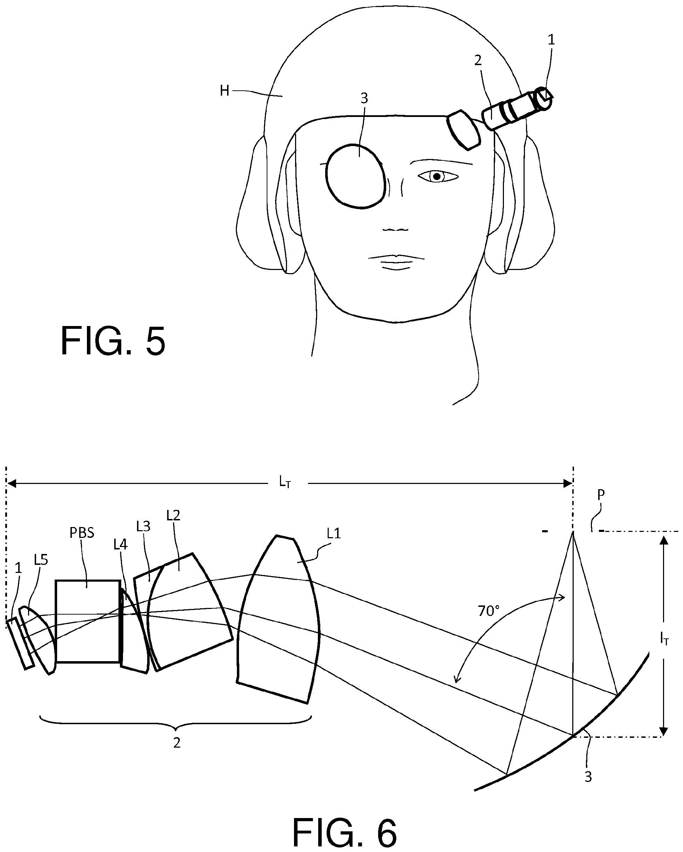

Une vue en coupe de l'architecture optique complète d'un ensemble monoculaire comportant un tel afficheur est représentée sur la figure 4. Cet exemple n'est pas limitatif. Il comporte un afficheur 1, une optique-relais comportant quatre lentilles L1, L2, L3 et L4 et un combineur 3 formant une image collimatée au niveau de la pupille P. Sur cette figure et sur la figure 6, les contours des composants sont représentés en traits gras. Trois rayons lumineux en traits fins sont également tracés. Ils représentent les rayons moyens passant par le centre de la pupille correspondant au champ central qui suit l'axe optique et aux deux champs extrêmes.

Les caractéristiques générales de cet ensemble monoculaire sont les suivantes :
- Type d'afficheur : LCD ou OLED de 8 mm x 5 mm
- Champ visuel : 32 degrés horizontal x 18 degrés vertical
- Dimensions pupillaires : 10 mm x 10 mm
- Encombrement : Longueur L_{T} : 86 mm et largeur I_{T} : 54 mm
Caractéristiques du combineur :
- Lame mince à faces courbes et parallèles entre elles traitée semi-réfléchissante
- Rayon de courbure moyen : 48 mm
- Surface de type polynomiale
- Angle de basculement : 36 degrés

Caractéristiques des quatre lentilles de l'optique-relais. La lentille L1 est la plus proche du combineur et la lentille L4 la plus proche de l'afficheur.
- Lentille L1 centrée
   ∘ Matériau : Plastique de type PMMA
   ∘ Première surface : type polynomiale de rayon de courbure moyen 10 mm - Seconde surface: type asphérique de rayon de courbure moyen 2000 mm
   ∘ Epaisseur centrale: 10 mm
- Doublet L2-L3 centré
   ∘ Matériaux : verres
   ∘ Première surface : sphérique de rayon de courbure : 14 mm - Seconde surface : sphérique de rayon de courbure : - 8 mm - Troisième surface : sphérique de rayon de courbure : - 90 mm
   ∘ Première épaisseur centrale : 6 mm - Seconde épaisseur centrale : 6 mm
- Lentille L4 excentrée et basculée
   ∘ Matériau : verre
   ∘ Première surface : sphérique de rayon de courbure : 20 mm - Seconde surface : sphérique de rayon de courbure : - 55 mm
   ∘ Epaisseur centrale: 5 mm

On peut également utiliser un système de visualisation selon l'invention avec un afficheur fonctionnant par réflexion de la lumière. Par exemple, cet afficheur peut être de type « LCOS », acronyme signifiant « Liquid Crystal On Silicone ». Une des difficultés est que, par nature, l'éclairage doit passer par l'optique-relais. A cette fin, on introduit un cube séparateur à l'intérieur même de l'optique-relais qui assure à la fois l'éclairage de l'afficheur et la transmission de la lumière réfléchie par celui-ci. Généralement, ce cube est du type « PBS », acronyme signifiant « Polarizing Beam Splitter ». Optiquement, ce cube correspond à l'ajout d'une lame de verre épaisse à faces planes et parallèles. De plus, l'optique-relais doit être télécentrique de façon à assurer un éclairage homogène. On entend par télécentrique une optique dont la pupille dans l'espace de l'afficheur est rejetée à l'infini.

La figure 5 représente une vue de face d'un système de visualisation monoculaire fonctionnant avec un afficheur « LCOS ». Comme on le voit sur cette figure, les contraintes d'implantation du cube séparateur conduisent à une solution optique plus complexe et nettement plus encombrante.

Une vue en coupe de l'architecture optique complète d'un ensemble monoculaire comportant un tel afficheur LCOS est représentée sur la figure 6. Il comporte un afficheur 1, une optique-relais comportant cinq lentilles L1, L2, L3, L4, L5 et un cube séparateur et un combineur 3 formant une image collimatée au niveau de la pupille P.

Les caractéristiques générales de cet ensemble monoculaire sont les suivantes :
- Type d'afficheur : LCOS de 12 mm x 9 mm
- Champ visuel : 32 degrés horizontal x 18 degrés vertical
- Dimensions pupillaires : 15 mm x 10 mm
- Encombrement : Longueur L_{T} : 162 mm et largeur I_{T} : 60 mm
Caractéristiques du combineur :
- Lame mince à faces courbes et parallèles entre elles traitée semi-réfléchissante
- Rayon de courbure moyen : 70 mm
- Surface de type polynomiale
- Angle de basculement : 35 degrés

Caractéristiques des cinq lentilles et du cube séparateur de l'optique-relais. La lentille L1 est la plus proche du combineur et la lentille L5 la plus proche de l'afficheur.
- Lentille L1 centrée
   ∘ Matériau : Plastique de type PMMA
   ∘ Première surface : type polynomiale de rayon de courbure moyen 42 mm - Seconde surface : type asphérique de rayon de courbure moyen -43 mm
   ∘ Epaisseur centrale: 26 mm
- Doublet L2-L3 excentré
   ∘ Matériaux : verres
   ∘ Première surface : sphérique de rayon de courbure : 74 mm - Seconde surface : sphérique de rayon de courbure : - 28 mm - Troisième surface : sphérique de rayon de courbure : - 88 mm
   ∘ Première épaisseur centrale : 26 mm - Seconde épaisseur centrale : 1 mm
- Lentille L4 ménisque convergent excentré
   ∘ Matériau : verre
   ∘ Première surface : sphérique de rayon de courbure : 38 mm - Seconde surface : sphérique de rayon de courbure : 160 mm
   ∘ Epaisseur centrale: 10 mm
- Cube séparateur
   ∘ Matériau : verre
   ∘ Epaisseur : 21 mm
- Lentille L5
   ∘ Matériau : verre
   ∘ Première surface : sphérique de rayon de courbure : 16 mm - Seconde surface : sphérique de rayon de courbure : - 65 mm
   ∘ Epaisseur centrale: 7 mm

## Revendications

1. Système de visualisation comportant un premier afficheur (1) et un premier ensemble optique comportant une première optique-relais (2) et un premier mélangeur optique (3) partiellement transparent, ladite première optique-relais (2) comportant une première lentille frontale, le premier ensemble optique étant agencés pour former une seconde image à l'infini d'une première image affichée par le premier afficheur, le système de visualisation étant destiné à être porté par la tête d'un utilisateur, le premier mélangeur optique étant disposé devant un des deux yeux dudit utilisateur en conditions d'utilisation, la pupille optique de sortie du premier ensemble étant disposée au niveau dudit oeil, l'axe optique du premier ensemble optique correspondant au rayon lumineux du champ de vision central passant par le centre de la pupille optique, le premier mélangeur optique étant une lame mince à faces courbes sensiblement parallèles, chaque face étant définie par une loi polynomiale ou un fichier de points définissant une forme libre, le système de visualisation étant **caractérisé en ce que**:
L'inclinaison du premier mélangeur optique sur l'axe optique est d'environ 35 degrés,
La distance séparant la pupille de sortie du point d'intersection entre l'axe optique et le premier mélangeur optique vaut environ 60 millimètres ;
En position d'utilisation, l'inclinaison de l'axe optique moyen entre le premier mélangeur optique et la première lentille frontale dans un plan vertical et par rapport à une droite joignant les centres des deux yeux est d'environ 25 degrés, de façon que la première optique-relais soit située au niveau du front et au-dessus de l'autre oeil de l'utilisateur, en position croisée avec le premier mélangeur optique.

2. Système de visualisation selon la revendication 1, **caractérisé en ce que** la première optique-relais (2) comportant une première lentille frontale (L1), la première surface de ladite première lentille frontale située au plus près du mélangeur est définie par une loi polynomiale ou un fichier de points définissant une forme libre.

3. Système de visualisation selon la revendication 2, **caractérisé en ce que** la seconde surface de la première lentille frontale (L1) est asphérique ou est définie par une loi polynomiale ou un fichier de points définissant une forme libre.

4. Système de visualisation selon l'une des revendications précédentes, **caractérisé en ce que** le premier afficheur (1) étant du type « LCD » ou « OLED », la première optique-relais (2) comporte uniquement, en partant du premier mélangeur optique vers le premier afficheur, la première lentille frontale (L1), un doublet de lentilles convergente-divergente (L2, L3) à surfaces sphériques et une lentille biconvexe (L4) excentrée à surfaces sphériques.

5. Système de visualisation selon l'une des revendications 1 à 3, **caractérisé en ce que** le premier afficheur (1) étant du type « LCOS », le système comportant une source d'éclairage, la première optique-relais est du type télécentrique et comporte uniquement, en partant du premier mélangeur optique vers le premier afficheur, la première lentille frontale (L1), un doublet de lentilles convergente-divergente (L2, L3) à surfaces sphériques, un ménisque convergent (L4) excentré à surfaces sphériques, un cube séparateur (PBS) apte à réfléchir la lumière issue de la source d'éclairage vers le premier afficheur et une lentille biconvexe (L5) excentrée à surfaces sphériques.

6. Système de visualisation selon la revendication 5, **caractérisé en ce que** le cube séparateur est du type « PBS ».

7. Système de visualisation selon l'une des revendications précédentes, **caractérisé en ce que** le système étant binoculaire, il comporte un second afficheur (1bis) et un second ensemble optique comportant une seconde optique-relais (2bis) et un second mélangeur optique (3bis) partiellement transparent, le second afficheur étant identique au premier afficheur, le second ensemble optique étant identique au premier ensemble optique, le second afficheur et le second ensemble optique étant disposés symétriquement par rapport au premier afficheur et au premier ensemble optique, de façon que le second mélangeur optique soit disposé devant l'autre oeil de l'utilisateur, la première optique-relais étant disposée au-dessus du second mélangeur optique et la seconde optique-relais étant disposée au-dessus du premier mélangeur optique, le plan de symétrie étant le plan médian de la tête.

## Patentansprüche

1. Anzeigesystem, das ein erstes Display (1) und eine erste optische Baugruppe umfasst, die ein erstes optisches Relais (2) und einen ersten teiltransparenten optischen Mischer (3) umfasst, wobei das erste optische Relais (2) eine erste Frontlinse umfasst, wobei die erste optische Baugruppe zum Bilden eines zweiten Bildes auf Unendlich eines von dem ersten Display angezeigten ersten Bildes ausgelegt ist, wobei das Anzeigesystem zum Tragen am Kopf eines Benutzers bestimmt ist, wobei der erste optische Mischer vor einem der beiden Augen des Benutzers unter Betriebsbedingungen angeordnet ist, wobei die optische Ausgangspupille der ersten Baugruppe in der Höhe des Auges angeordnet ist, wobei die optische Achse der ersten optischen Baugruppe einem Lichtstrahl des zentralen Blickfeldes entspricht, das die Mitte der optischen Pupille passiert, wobei der erste optische Mischer ein dünnes Blatt mit im Wesentlichen parallelen gekrümmten Flächen ist, wobei jede Fläche durch ein Polynomgesetz oder eine Punktedatei definiert wird, die eine freie Form definiert, wobei das Anzeigesystem **dadurch gekennzeichnet ist, dass**:
die Neigung des ersten optischen Mischers auf der optischen Achse etwa 35 Grad beträgt,
die die Ausgangspupille vom Schnittpunkt zwischen der optischen Achse und dem ersten optischen Mischer trennende Distanz etwa 60 mm beträgt;
in der Betriebsposition die Neigung der mittleren optischen Achse zwischen dem ersten optischen Mischer und der ersten Frontlinse in einer vertikalen Ebene und relativ zu einer die Mittelpunkte der beiden Augen verbindenden Geraden etwa 25 Grad beträgt, so dass sich das erste optische Relais in der Höhe der Vorderseite und über dem anderen Auge des Benutzers in einer gekreuzten Position mit dem ersten optischen Mischer befindet.

2. Anzeigesystem nach Anspruch 1, **dadurch gekennzeichnet, dass** das erste optische Relais (2) eine erste Frontallinse (L1) umfasst, wobei die erste Oberfläche der ersten Frontallinse, die dem Mischer am nächsten liegt, durch ein Polynomgesetz oder eine Punktedatei definiert wird, die eine freie Form definiert.

3. Anzeigesystem nach Anspruch 2, **dadurch gekennzeichnet, dass** die zweite Oberfläche der ersten Frontallinse (L1) asphärisch ist oder durch ein Polynomgesetz oder eine Punktedatei definiert wird, die eine freie Form definiert.

4. Anzeigesystem nach einem der vorherigen Ansprüche, **dadurch gekennzeichnet, dass**, da das erste Display (1) vom "LCD"- oder "OLED"-Typ ist, das erste optische Relais (2), beginnend vom ersten optischen Mischer zum ersten Display, nur Folgendes umfasst: die erste Frontallinse (L1), ein Duplett von konvergenten-divergenten Linsen (L2, L3) mit sphärischen Oberflächen und eine exzentrische Bikonvexlinse (L4) mit sphärischen Oberflächen.

5. Anzeigesystem nach einem der Ansprüche 1 bis 3, **dadurch gekennzeichnet, dass**, da das erste Display (1) vom "LCOS"-Typ ist, wobei das System eine Beleuchtungsquelle umfasst, das erste optische Relais vom telezentrischen Typ ist und, ausgehend vom ersten optischen Mischer zum ersten Display, nur Folgendes umfasst: die erste Frontlinse (L1), ein Duplett von konvergenten-divergenten Linsen (L2, L3) mit sphärischen Oberflächen, eine exzentrische konvergente Meniskuslinse (L4) mit sphärischen Oberflächen, einen Strahlteilerwürfel (PBS), der das von der Beleuchtungsquelle ausgehende Licht zum ersten Display reflektieren kann, und eine exzentrische Bikonvexlinse (L5) mit sphärischen Oberflächen.

6. Anzeigesystem nach Anspruch 5, **dadurch gekennzeichnet, dass** der Strahlteilerwürfel vom "PBS"-Typ ist.

7. Anzeigesystem nach einem der vorherigen Ansprüche, **dadurch gekennzeichnet, dass** das System, da es binokular ist, ein zweites Display (1bis) und eine zweite optische Baugruppe umfasst, die ein zweites optisches Relais (2bis) und einen zweiten teiltransparenten optischen Mischer (3bis) umfasst, wobei das zweite Display mit dem ersten Display identisch ist, wobei die zweite optische Baugruppe mit der ersten optischen Baugruppe identisch ist, wobei das zweite Display und die zweite optische Baugruppe symmetrisch mit Bezug auf das erste Display und auf die erste optische Baugruppe angeordnet sind, so dass der zweite optische Mischer vor dem anderen Auge des Benutzers angeordnet ist, wobei die erste Relaisoptik über dem zweiten optischen Mischer angeordnet ist und die zweite Relaisoptik über dem ersten optischen Mischer angeordnet ist, wobei die Symmetrieebene die Medianebene des Kopfes ist.

## Claims

1. A viewing system comprising a first display (1) and a first optical assembly comprising a first optical relay (2) and a first partially transparent optical mixer (3), said first optical relay (2) comprising a first front lens, the first optical assembly being arranged to form a second image at infinity of a first image displayed by the first display, the viewing system being intended to be worn on the head of a user, the first optical mixer being disposed in front of one of the two eyes of said user in operating conditions, the exit optical pupil of the first assembly being disposed level with said eye, the optical axis of the first optical assembly corresponding to the light ray of the central field of view passing through the centre of the optical pupil, the first optical mixer being a thin strip with substantially parallel curved faces, each face being defined by a polynomial rule or by a file of points defining a free form, the viewing system being **characterised in that**:
the incline of the first optical mixer on the optical axis is approximately 35 degrees;
the distance separating the exit pupil from the point of intersection between the optical axis and the first optical mixer is approximately 60 millimetres;
in the operating position, the incline of the mean optical axis between the first optical mixer and the first front lens, in a vertical plane and relative to a straight line joining the centres of the two eyes, is approximately 25 degrees, so that the first optical relay is located level with the forehead and above the other eye of the user, in a crossed position with the first optical mixer.

2. The viewing system as claimed in claim 1, **characterised in that** the first optical relay (2) comprising a first front lens (L1), with the first surface of said first front lens being located closest to the mixer, is defined by a polynomial rule or by a file of points defining a free form.

3. The viewing system as claimed in claim 2, **characterised in that** the second surface of the first front lens (L1) is aspherical or is defined by a polynomial rule or by a file of points defining a free form,

4. The viewing system as claimed in any one of the preceding claims, **characterised in that**, with the first display (1) being of the "LCD" or "OLED" type, the first optical relay (2) only comprises, starting from the first optical mixer to the first display, the first front lens (L1), a pair of convergent-divergent lenses (L2, L3) with spherical surfaces and an eccentric biconvex lens (L4) with spherical surfaces.

5. The viewing system as claimed in any one of claims 1 to 3, **characterised in that**, with the first display (1) being of the "LCOS" type and the system comprising a light source, the first optical relay is of the telecentric type and only comprises, starting from the first optical mixer to the first display, the first front lens (L1), a pair of convergent-divergent lenses (L2, L3) with spherical surfaces, an eccentric converging meniscus lens (L4) with spherical surfaces, a beam-splitter cube (PBS) capable of reflecting the light originating from the light source towards the first display and an eccentric biconvex lens (L5) with spherical surfaces.

6. The viewing system as claimed in claim 5, **characterised in that** the beam-splitter cube is of the "PBS" type.

7. The viewing system as claimed in any one of the preceding claims, **characterised in that**, with the system being binocular, it comprises a second display (1bis) and a second optical assembly comprising a second optical relay (2bis) and a second partially transparent optical mixer (3bis), the second display being identical to the first display, the second optical assembly being identical to the first optical assembly, the second display and the second optical assembly being symmetrically disposed relative to the first display and to the first optical assembly, so that the second optical mixer is disposed in front of the other eye of the user, the first optical relay being disposed above the second optical mixer and the second optical relay being disposed above the first optical mixer, the plane of symmetry being the median plane of the head.
